(19) Europäisches Patentamt

European Patent Office

Office européen des brevets

(11) Veröffentlichungsnummer: **0 517 082 A2**

(12) **EUROPÄISCHE PATENTANMELDUNG**

(21) Anmeldenummer: **92108903.3**

(22) Anmeldetag: **27.05.92**

(30) Priorität: **29.05.91 CH 1589/91**

(43) Veröffentlichungstag der Anmeldung:
**09.12.92 Patentblatt 92/50**

(84) Benannte Vertragsstaaten:
**AT DE FR GB IT NL SE**

(71) Anmelder: **ASCOM ZELCOM AG**
**Eichtalstrasse**
**CH-8634 Hombrechtikon(CH)**

(51) Int. Cl.⁵: **G07C 5/08**

(72) Erfinder: **Küng, Roland**
**Bühlhofstrasse 66A**
**CH-8633 Wolfhausen(CH)**
Erfinder: **Hartmann, René, Dr.**
**Schachenstrasse 4**
**CH-8633 Wolfhausen(CH)**

(74) Vertreter: **Schwerdtel, Eberhard, Dr.**
**Ascom Tech AG Gewerblicher Rechtsschutz**
**Freiburgstrasse 370**
**CH-3018 Bern(CH)**

(54) **Verfahren und Vorrichtung zur fälschungssicheren Erfassung der Radumdrehungszahl von Fahrzeugen.**

(57) Es wird die Umdrehungszahl eines mit dem Antrieb gekuppelten, bei Bewegung des Fahrzeugs rotierenden Teils durch einen Sensor (28) erfasst, aus dessen Signalen ein Taktsignal gebildet und einem Speicher (27) zugeführt wird, dessen Inhalt durch einen Sender (13, 14) an ein Abfragegerät übertragbar ist. Die Umdrehungszahl wird mit Hilfe von von der Rotationslage des rotierenden Teils abhängigen, nicht manipulierbaren Beschleunigungsgrössen bestimmt, und die Speisung (10) des Senders erfolgt von ausserhalb des Fahrzeugs. Die genannten Beschleunigungsgrössen sind vorzugsweise durch die Erdbeschleunigung und/oder durch die Zentrifugalbeschleunigung gebildet.

Anwendung zur Registrierung der Fahrstrecke oder von anderen Ereignissen, wie zum Beispiel Geschwindigkeitsübertretungen und dergleichen. Die Einrichtung ist manipulations- und fälschungssicher.

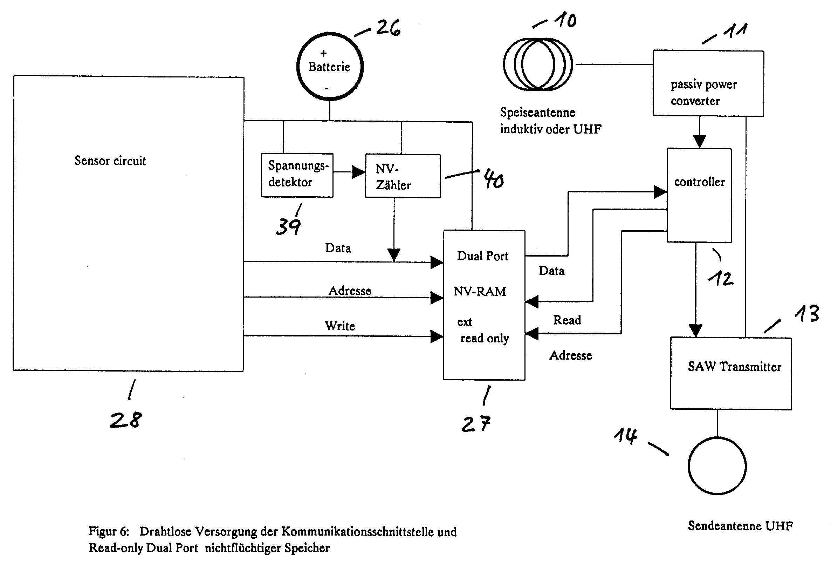

Figur 6: Drahtlose Versorgung der Kommunikationsschnittstelle und Read-only Dual Port nichtflüchtiger Speicher

EP 0 517 082 A2

Die Erfindung betrifft ein Verfahren zur fälschungssicheren Erfassung der Radumdrehungszahl von Fahrzeugen durch Ueberwachung der Umdrehungszahl eines mit dem Antrieb gekuppelten, bei Bewegung des Fahrzeugs rotierenden Teils durch einen Sensor, aus dessen Signalen ein Taktsignal gebildet und einem Speicher zugeführt wird, dessen Inhalt durch einen Sender an ein Abfragegerät übertragbar ist.

Bei einem aus der EP-B-O 195 737 bekannten Verfahren dieser Art erfolgt die Ueberwachung der Umdrehungszahl durch einen zweiteiligen, aus einem magnetischen Geber und aus einem durch eine Hallsonde gebildeten Aufnehmer bestehenden Sensor, welcher in einem gemeinsamen Gehäuse untergebracht ist. Da der nicht rotierbare Teil des Sensors eine gewisse Masse aufweisen muss, damit er durch seine Trägheit nicht mitrotiert, ergeben sich relativ grosse Dimensionen des Gehäuses, so dass dieses praktisch nur von aussen auf die Radnabe montiert werden kann und damit gegen mechanische Beschädigungen nicht geschützt ist. Ausserdem kann der Signalgeber abgeschirmt oder entfernt werden, und es ist auch möglich, den Signalaufnehmer mit einem dritten Element derart zu sättigen, dass die Funktion des Sensors unterbrochen ist.

Der Sender in der EP-B-O 195 737 ist durch eine Batterie gespeist, welche durch dauerndes Anregen des Sensorempfängers rasch entleert werden kann, wodurch ebenfalls eine Funktionsunterbrechung erfolgt. Alle diese Manipulationsmöglichkeiten beeinträchtigen die Funktionsfähigkeit dieser bekannten Vorrichtung ganz ausserordentlich und machen diese anfällig gegen Fälschung und Sabotage.

Durch die Erfindung soll nun ein Verfahren der eingangs genannten Art angegeben werden, bei dem keine Manipulation oder Verfälschung der Messung möglich ist, und bei dem der Sensor möglichst universell einsetzbar ist, das heisst an verschiedensten Stellen des Fahrzeugs eingebaut werden kann.

Diese Aufgabe wird erfindungsgemäss dadurch gelöst, dass die Umdrehungszahl mit Hilfe von von der Rotationsanlage des rotierenden Teils abhängigen, nicht manipulierbaren Beschleunigungsgrössen bestimmt wird, und dass die Uebertragung des Inhalts des Speichers an das Abfragegerät durch einen von ausserhalb des Fahrzeugs gespeisten Sender erfolgt.

Gemäss einer bevorzugten Ausführungsform des erfindungsgemässen Verfahrens sind die genannten Beschleunigungsgrössen durch die Erdbeschleunigung und/oder durch die Zentrifugalbeschleunigung gebildet.

Die Erfindung betrifft weiter eine Vorrichtung zur Durchführung des genannten Verfahrens, mit einem Sensorteil, einem Zähler, einem Speicher und einem Kommunikationsteil zur Abfrage des Inhalts des Speichers.

Die erfindungsgemässe Vorrichtung ist dadurch gekennzeichnet, dass der Sensorteil mindestens einen Beschleunigungssensor und der Kommunikationsteil einen von ausserhalb des Fahrzeugs speisbaren Sender aufweist.

Durch die Bestimmung der Umdrehungszahl anhand von nicht beeinflussbaren Beschleunigungsgrössen und durch die Verwendung eines keine Kabelschnittstelle und keine interne Energiequelle aufweisenden Kommunikationsteils, ist das von der erfindungsgemässen Vorrichtung gelieferte Messergebnis manipulier- und fälschungssicher und liefert daher eindeutige Aussagen über mit der Umdrehungszahl eindeutig zusammenhängende Parameter. Derartige Parameter sind beispielsweise die zurückgelegte Fahrstrecke, Ueberschreitungen von zulässigen Höchstgeschwindigkeiten oder Maximaldrehzahlen, und andere mehr. Die erfindungsgemässe Vorrichtung kann also dazu verwendet werden, von diesen Parametern abhängige Kosten zu bestimmen, wie dies beispielsweise beim sogenannten Oekobonus-System der Fall ist, wo die Fahrzeughalter eine von der zurückgelegten Fahrstrecke abhängige Umweltabgabe zu entrichten haben.

Im folgenden wird die Erfindung anhand von in den Zeichnungen dargestellten Ausführungsbeispielen näher erläutert; es zeigt:

Fig. 1 eine schematische Darstellung zur Funktionserläuterung,

Fig. 2 ein Diagramm des zeitlichen Verlaufs eines typischen Messsignals eines der in Fig. 1 dargestellten Sensoren,

Fig. 3 ein Blockschaltbild einer ersten Ausführungsform eines erfindungsgemässen Sensorteils,

Fig. 4 eine Detailvariante des Sensorteils von Fig. 3,

Fig. 5 ein Blockschaltbild einer zweiten Ausführungsform eines erfindungsgemässen Sensorteils,

Fig. 6 ein Blockschaltbild der Speisung und Auslesevorrichtung des Kommunikationsteils,

Fig. 7 ein Blockschaltbild des Speichers der Vorrichtung,

Fig. 8 ein Blockdiagramm einer Anordnung mit einer erfindungsgemässen Vorrichtung, einem Auslesegerät und einer amtlichen Zentrale; und

Fig. 9 ein Ausführungsbeispiel für eine Sicherung gegen unbefugtes Entfernen einer erfindungsgemässen Vorrichtung.

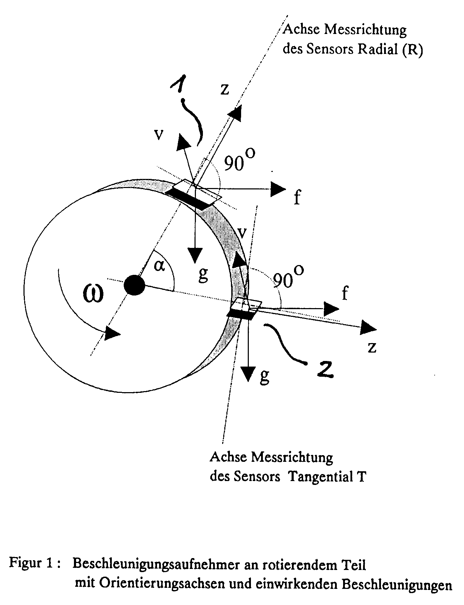

Fig. 1 zeigt einen durch eine Scheibe S symbolisierten Teil eines Fahrzeugs, welcher mit dessen Antrieb oder Fahrgestell gekuppelt ist oder Teil von diesem bildet und bei Bewegung des Fahrzeugs rotiert. Wesentlich ist, dass dieser rotierende Teil S eine eindeutige Zuordnung von Umdrehungszahl zur Fahrdistanz erlaubt; daher sind Räder, Achsen und dergleichen besonders gut als rotierender Teil S geeignet.

An einem derartigen rotierenden Teil S treten vier Beschleunigungsarten auf:
- Erdbeschleunigung g
- Zentrifugalbeschleunigung z
- Vibrationsbeschleunigungen v
- Fahrbeschleunigungen f

Die Erdbeschleunigung g, die Gravitation, ist auf keine Weise manipulierbar und eignet sich daher vorzüglich als fälschungssichere Messgrösse. Die Zentrifugalbeschleunigung z, die von der Drehgeschwindigkeit des rotierenden Teils S abhängig ist und an diesem radial nach aussen wirkt, kann ebenfalls nicht durch äussere Einwirkungen manipuliert werden. Die Vibrationsbeschleunigungen v, die durch Motorengeräusche und Fahrbahnunebenheiten entstehen, sind Störgrössen, die die Messung der Erdbeschleunigung g und der Zentrifugalbeschleunigung z stark verfälschen können. Die Fahrbeschleunigungen f können am rotierenden Teil S den genannten Beschleunigungen additiv supponiert werden und spielen für die nachfolgend beschriebene Funktion keine Rolle, da sich die Fahrbewegung aus einem am Ort drehenden rotierenden Teil S und aus der Vorwärtsbewegung zusammengesetzt denken lässt.

Integrierte Beschleunigungsmesser sind als miniaturisierte Silizium Chips in verschiedenen Ausführungen als Bausteine hoher Zuverlässigkeit und mit guten Leistungsmerkmalen erhältlich und ermöglichen einen monolithischen Aufbau eines Umdrehungszählers.

Gemäss Fig. 1 sind am rotierenden Teil S zwei Beschleunigungsaufnehmer oder Sensoren 1 und 2 angeordnet. Der Beschleunigungsaufnehmer 1 liefert bei Rotation des rotierenden Teils S ein elektrisches Signal, das der Summe der genannten vier Beschleunigungen in der Richtung der Orientierungsachse des Sensors entspricht. Da diese Orientierungsachse radial gerichtet ist, wird der Sensor 1 in den Figuren als "Typ R" bezeichnet. Der Beschleunigungsaufnehmer 2 ist gegenüber dem Sensor 1 um einen Winkel von 90° versetzt, wodurch die Komponente der Zentrifugalbeschleunigung z entfällt, da sie senkrecht zur Orientierungsachse des Sensors 2 steht. Der Sensor 2 wird in den Figuren als "Typ T" bezeichnet.

Bei jeder Umdrehung des rotierenden Teils S wirkt die Erdbeschleunigung g auf den Sensor 2 einmal positiv und einmal negativ, so dass der von der Erdbeschleunigung herrührende Teil G des elektrischen Signals das Vorzeichen wechselt, wobei die Anzahl dieser Vorzeichenwechsel zur Umdrehungszahl Rho des rotierenden Teils S proportional ist. Dabei gilt:

$$G = g.\sin(2.\pi.\rho. t) \qquad (t = Zeit)$$

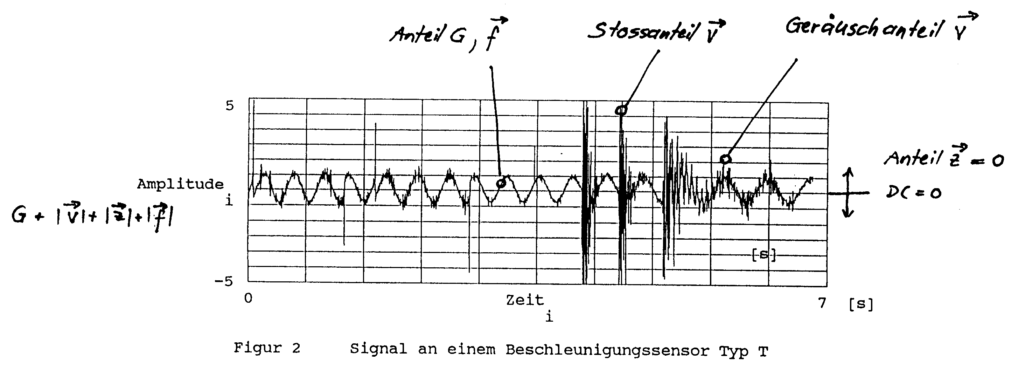

Wenn der Signalanteil G allein verfügbar wäre, dann wäre eine Umrechnung in die Reisedistanz über die geometrischen Grössen des Fahrzeugs einfach durchzuführen. Diese Umrechnung wird aber durch den von den Vibrationsbeschleunigungen v herrührenden Störanteil wesentlich erschwert, weil Schläge mit Beschleunigungen, die ein Vielfaches der Erdbeschleunigung g ausmachen können, laufend auftreten und dabei einerseits als Rauschanteil und andererseits als Stossanregung der mechanischen Komponenten des Sensorteils wirken. Da diese Stosseinwirkungen an verschiedenen Stellen des Fahrzeugs meist unkorreliert sind, ist eine einfache subtraktive Kompensation nicht durchführbar. Daher muss das elektrische Signal der Sensoren vom Vibrationsanteil befreit werden, um eine eindeutige Auswertung der fälschungssicheren Messgrösse zu ermöglichen. In Fig. 2 ist beispielhaft das von einem Sensor 2 (Typ T) gemessene Signal dargestellt.

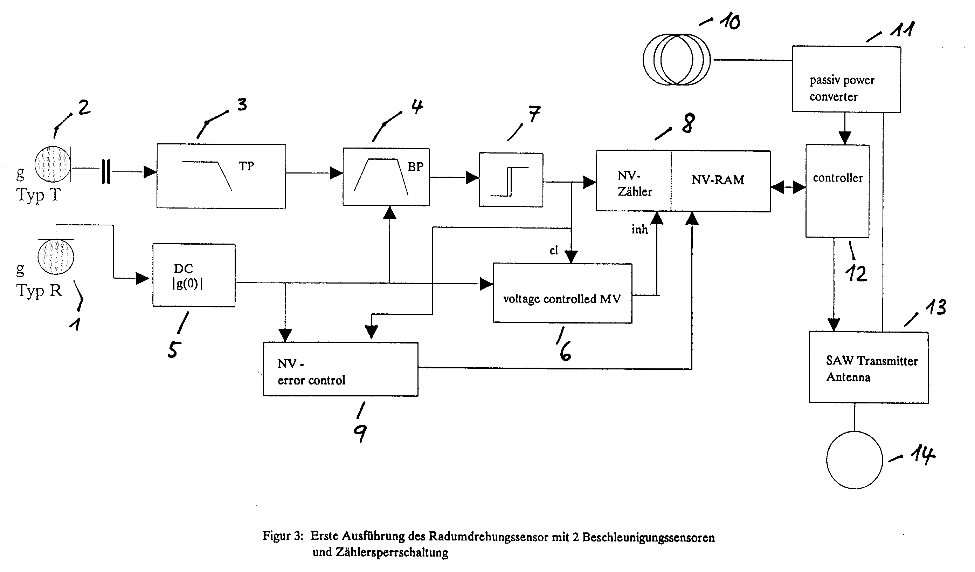

Zur Befreiung des Signals des Sensors 2 vom Anteil der Vibrationsbeschleunigungen v und zur Ermöglichung der Auswertung einer fälschungssicheren Messgrösse wird gemäss Fig. 3 das gestörte Erdbeschleunigungssignal des Sensors 2 zuerst bandbreitenbegrenzt und dann mit einem Tiefpass 3 adaptiv gefiltert. Ein Bandpassfilter 4 mit variabler Mittenfrequenz entsprechend der momentanen Umdrehungsfrequenz befreit das Summensignal soweit vom Störanteil, dass die Auswertung der Wechsel der Erdbeschleunigungseinwirkung auf den Sensor eindeutig ermittelt werden kann. So kann beispielsweise zur Steuerung der Mittenfrequenz die momentane Umdrehungszahl aus der Zentrifugalbeschleunigung z ermittelt werden:

$$z = r.(2.\pi. \rho)^2$$

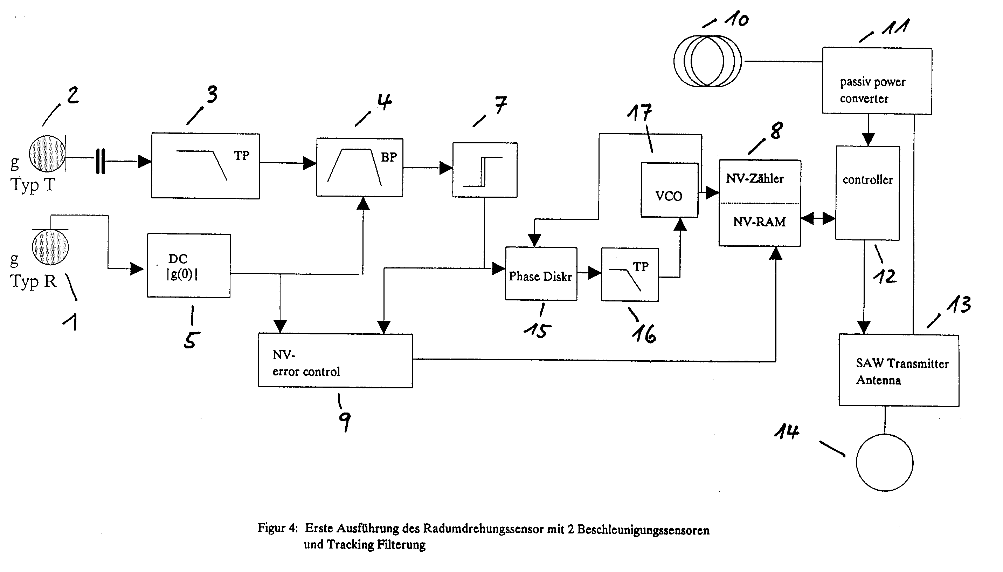

Bei bekanntem Radius r und bekannter Zentrifugalbeschleunigung z kann eine Schätzung der Umdrehungszahl Rho gefunden werden. Die Zentrifugalbeschleunigung ist im Gleichspannungsanteil des Summensignals des Sensors 1 vom Typ R enthalten. Durch eine Ausfilterung dieses DC-Anteils durch eine geeignete Stufe 5 (Fig. 3, 4) oder mittels des Differenzsignals zweier um $\alpha = 90°$ auf dem rotierenden Teil S verschoben montierten Sensoren 1 und 2 kann das elektrisch verstimmbare Bandpassfilter 4 (Fig. 3) adaptiert werden. Bei beiden Methoden variiert der Gleichstromanteil zeitlich langsam mit der sich durch den Fahrvorgang laufend ändernden Umdrehungszahl, so dass das Filter 4 verstimmbar sein muss.

Derartige verstimmbare Filter sind beispielsweise in der sogenannten Switched-Capacitor-Filtertechnik und in der digitalen Signalverarbeitung mit genügender Präzision bekannt. Zur weiteren Verminderung der Störeinflüsse durch Vibration und Schläge empfiehlt sich eine weitere Filterung, durch welche der Fehler bei der Zählung des rotierenden Teils S (Fig. 1) möglichst klein gehalten werden kann. Zu diesem Zweck wird gemäss Fig. 3 in einem spannungsgesteuerten monostabilen Multivibrator 6 abhängig vom Ausgang des Gleichstromschätzers 5 ein Sperrimpuls adaptiver Dauer erzeugt, welcher den Zähler 8 für diese Dauer sperrt. Der Sperrvorgang wird jeweils durch das Taktsignal am Ausgang eines Kompensators 7 ausgelöst, also unmittelbar nach einem erfolgten Zähltakt.

Der Komparator 7 dient zur Formung des adaptiv gefilterten Signals am Ausgang des Bandpassfilters 4 zu einem rechteckigen Digitalsignal. Der Zähler 8 ist in nichtflüchtiger Technologie (Non-Volatile, NV) hergestellt, so dass sein Zählerstand auch ohne Energieversorgung erhalten bleibt. Solche Technologien sind bekannt, beispielsweise EEPROM oder ferroelektrische Speicher. Vorteilhaft wird der Zähler 8 mit einem ebenfalls nicht flüchtigen Speicher 8' ergänzt, so dass weitere Signale gespeichert werden können.

Wie sich Fig. 3 weiter entnehmen lässt, ist eine Fehlerkontrollschaltung 9 zur Ueberwachung der korrekten Funktion des dargestellten Umdrehungszählers vorgesehen. Diese überprüft beispielsweise, ob bei vorhandenem Gleichstromanteil am Ausgang des Gleichstromschätzers 5 am Eingang des Zählers 8 Zähltakte vorhanden sind. Beim Auftreten eines Funktionsfehlers können interne Rückstellsignale ausgelöst oder es kann der Sensor bei der nächsten Wartung als defekt erkannt werden.

Der Kommunikationsteil der Vorrichtung wird durch eine Speiseantenne 10, einen Energieumwandler 11, eine Steuerstufe 12, einen Sender 13 und eine Sendeantenne 14 gebildet. Der Kommunikationsteil kann die Daten aus dem Zähler 8 und aus der Fehlerkontrollschaltung 9 über eigens vorgesehene Ausgänge jederzeit unabhängig beziehen. Die entsprechende Technik ist bei Speicherbausteinen als Dual-Port-Technik bekannt. Die Integration der beschriebenen Baublöcke wird vorzugsweise in verlustleistungsarmer CMOS-Technik ausgeführt.

Gemäss Fig. 4 kann anstelle der zusätzlichen Filterung der Zählimpulse durch den Multivibrator 6 auch eine Mittelung des Sensorsignals mit Hilfe einer bekannten Tracking-Schaltung durchgeführt werden, welche auf dem Phase-Locked-Loop-(PLL)Prinzip basiert. Dazu gibt ein spannungsgesteuerter Oszillator 17 sein Ausgangssignal an den einen Eingang eines Phasenvergleichers 15, dessen anderer Eingang mit dem Komparator 7 verbunden ist. Ueber einen Tiefpass 16 ist ein Regelkreis zum Oszillator 17 geschlossen, so dass die Oszillatorfrequenz im störungsarmen Fall der Frequenz am Ausgang des Komparators 7 entspricht. Im kurzzeitig stark gestörten Fall (Stossanteil im Signal von Fig. 2) verhindert die tiefe Grenzfrequenz des Tiefpasses 16 ein sofortiges Nachregeln der Oszillatorfrequenz, so dass diese die Frequenz zeitlich ausmittelt und dadurch die Störung unterdrückt. Der so gesiebte Ausgang des Oszillators 17 wird auf den Zähler 8 geführt.

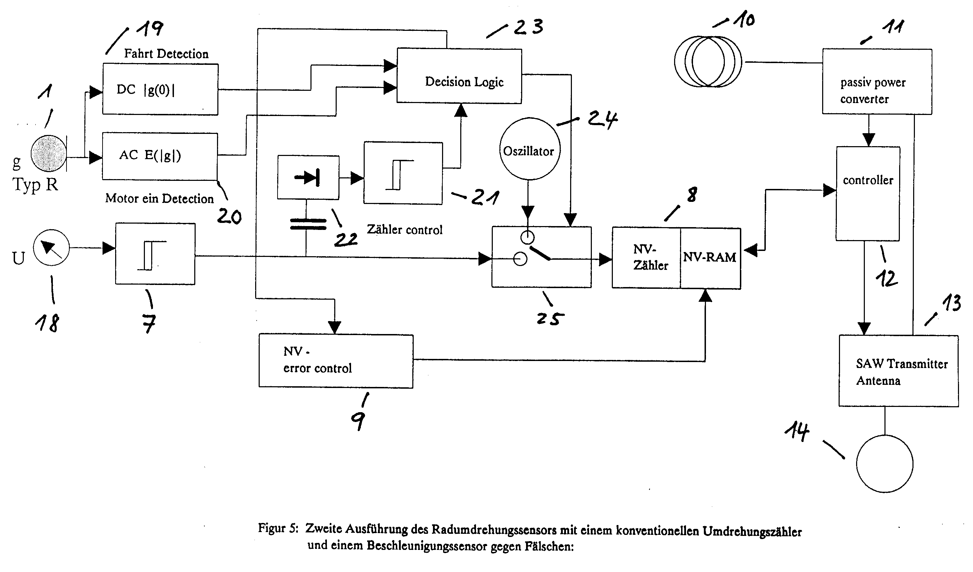

Bei dem in Fig. 5 dargestellten Ausführungsbeispiel wird ein herkömmlicher Umdrehungssensor 18, wie er beispielsweise in der EP-B-0 195 737 beschrieben ist, dazu benutzt, die Drehzahl des rotierenden Teils S (Fig. 1) zu erfassen. Da aber diese Grösse manipulierbar ist, müssen die Anteile des Summensignals des Beschleunigungsaufnehmers 1 etwas anders ausgewertet werden, was in Fig. 5 dargestellt ist. Und zwar wird aus der errechneten Grösse der Zentrifugalbeschleunigung ein für den Zustand "Fahren" charakteristisches Merkmal ermittelt, und aus der errechneten Grösse des gleichspannungsfreien, gleichgerichteten Mittelwertes des Sensors 1 wird auf den Zustand "Fahrzeug in Betrieb" geschlossen.

Der Zustand "Fahren" wird in einer Stufe 19 durch eine Schätzung des Gleichspannungswerts und Vergleich mit einer minimalen Schwelle, und der Zustand "Fahrzeug in Betrieb" wird in einer Stufe 20 durch eine Schätzung des Wechselstromanteils ermittelt. Die Ermittlung des Zustands "Fahrzeug im Betrieb" erfolgt vor allem zur Unterscheidung von Fahr- und Standphasen bei laufendem Motor, wobei die Detektion des durch das Getriebe verursachten und eher höherfrequenten Geräuschen besonders gut geeignet ist. Im weiteren ist dem Komparator 7 eine Stufe 22 nachgeschaltet, in welcher der Wechselstromanteil des vom Komparator 7 gelieferten Signals gleichgerichet wird. Das letztere Signal wird mit einer Schwelle 21 verglichen.

Die Ausgänge der Stufen 19, 20 und 21 werden in einer logischen Schaltung 23 verknüpft, welche die Entscheidungsgrundlage dafür liefert, ob eine Manipulation vorliegt oder nicht. Wenn beispielsweise in eindeutigen Phasen der Fahrzeugbewegung der Umdrehungssensor 18 nicht zählt, so wird eine Manipulation angenommen, und der Umdrehungszähler schaltet den Zähleingang des Zählers durch einen Schalter 25 auf einen Oszillator 24 mit einer festen "Straf"-Zählfrequenz um.

Dieser Gedanke der Strafe bei Manipulation ist auch unter Verwendung von Teilen der Ausführungsbeispiele der Fig. 3 und 4 denkbar, indem bei Manipulation am Sensor 18 Gravitationsfeldwechsel nur minimal gefiltert werden. Da das mit nur geringem Aufwand gefilterte Signal infolge von Störsignalen im Durchschnitt eine höhere Frequenz aufweist, wird eine Manipulation ebenfalls bestraft. Die Fehlerkontrolle 9 ermöglicht dank des integrierten nichtflüchtigen Zustandsspeichers eine spätere Analyse des Vorgangs.

Es ist vorteilhaft, an einem Fahrzeug zwei Sensorteile der beschriebenen Art anzubringen, und zwar an verschiedenen Stellen, wie zum Beispiel an einem linken und an einem rechten Rad, weil dadurch einerseits ein Totalausfall durch mechanische Beschädigungen ausgeschlossen und andererseits mutwilligen Beschädigungen vorgebeugt wird. Durch geeignete Kombination der erwähnten Stufen ist auch innerhalb eines Radumdrehungszählers eine Redundanz realisierbar, so dass elektrische Ausfälle überbrückt werden können.

Die in den Figuren 3-5 dargestellten Stufen Steuerstufe 12, Sender 13 und Sendeantenne 14 des Kommunikationsteils bilden die Kommunikationsschnittstelle der Vorrichtung für das Ein- und Auslesen von Daten. Darstellungsgemäss wird als Schnittstelle eine drahtlose Datenübertragung mit batterieunabhängiger, eigener Energieversorgung benutzt. Eine Kabelschnittstelle wäre für die Erzielung einer hohen Fälschungssicherheit nicht gut geeignet, da an den elektrischen Kontakten die Funktion des Zählers beeinträchtigende Manipulationen oder Zerstörungen bewirkt werden könnten.

Die vorgeschlagene Kommunikationsschnittstelle ist eine Mischform von konventioneller und sogenannter passive Telemetrie, bei welch letzterer ein Kommunikationsteil seine Energie drahtlos von extern bezieht. Der bisher beschriebene Messteil des Sensorteils ist in Fig. 6 mit dem Bezugszeichen 28 bezeichnet. Diesem Messteil 28 ist für die Ablage der Zählergrösse und Statuswerte ein sogenannter Dual-Port-RAM-Speicher 27, das ist ein Speicher mit zwei Zugriffstoren, zugeordnet. Der Messteil 28 und der Speicher 27 sind von einer langlebigen Knopfzelle 26 gespeist. Die Kommunikationsschnittstelle 12, 13, 14 wird hingegen nicht von der Batterie 26 gespeist, da die Batterie durch dauerndes Anregen der Schnittstelle vorzeitig entleert werden könnte. Der Telemetrieteil wird während eines Auslesevorgangs über die Antenne 10 von aussen mit Energie gespeist, und aus dem Speicher 27 können lediglich der Zählerstand und Statuswerte ausgelesen werden. Das eine Tor des Speichers 27 ist nur im Schreibbetrieb benutzbar und ist über eine Adress-, Daten- und Schreibleitung an den Messteil 28 angeschlossen; das andere Tor ist nur im Lesebetrieb benutzbar und ist über eine Adress-, Daten- und Leseleitung an die Steuerstufe 12 angeschlossen.

Die Steuerstufe 12 enthält einen automatischen Adressgenerator; ein Lesebefehl bewirkt ein durch die Steuerstufe 12 gesteuertes, vollständiges Auslesen des Speichers 27. Der Lesebefehl wird von der Steuerstufe 12 dann generiert, wenn diese genügend Speisespannung im Energiewandler 11 feststellt. Die Daten werden dann von der Steuerstufe 12 nach bekannter Art mit Fehlerschutzinformation versehen und an einen miniaturisierten Hochfrequenzsender 13 mit kleiner Leistung, der beispielsweise in Surface Acoustic Wave (SAW) Device Technik gefertigt sein kann, übertragen. Die Sendeenergie wird aus Gründen des Wirkungsgrads entweder niederfrequent induktiv übertragen oder im Mikrowellenbereich ausgestrahlt und von der Antenne 10 empfangen. Dabei ist die Antenne 10 so angeordnet, dass sie von einem externen Abfragegerät gut mit Energie versorgt werden kann; sie ist daher in ihrer Form vom Montageort des Zählers abhängig. Die zu erreichende Distanz der Fernabfrage richtet sich nach dem Montageort am Fahrzeug (Metall), der Baugrösse und der Senderleistungen und sollte für eine Reichweite mindestens bis zur Fahrbahn dimensioniert sein. Sowohl die Funktion des Umdrehungszählers als auch die Uebertragungsqualität des Senders 13 sind von Verschmutzungen der Einrichtung unabhängig.

Die Hochfrequenzdaten werden bei einer für die Senderminiaturisierung geeigneten Frequenz digital, beispielsweise mit Frequency-Shift-Keying (FSK) als Modulationsart via die Antenne 14 übertragen. Im Unterschied zu bekannten passiven Telemetrieverfahren sind Speisefrequenz und Datenübertragungsfrequenz einzeln für sich optimiert und die Daten werden digital übertragen um hohe Störfestigkeit und besten Wirkungsgrad bei kleiner Geometrie zu erhalten.

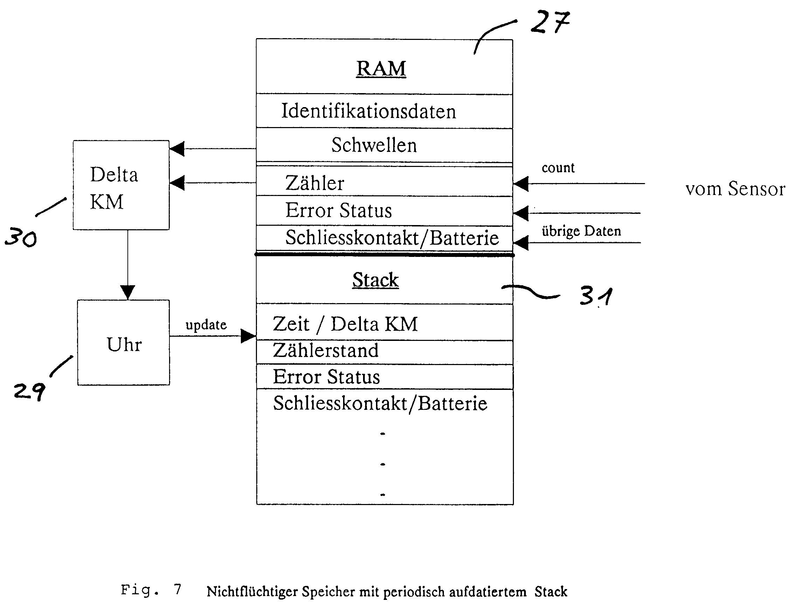

Ein Schreibvorgang in den Speicher 27 mit Daten von ausserhalb des Radumdrehungszählers ist elektronisch verhindert, so dass nach erfolgter Programmierung der Schaltung durch den Hersteller eine Manipulation der Daten unmöglich ist. Es ist möglich, vor der Montage der Einrichtung an einem Fahrzeug durch eine amtliche Stelle den Zähler und allenfalls fahrzeugspezifische Daten unlöschbar zu programmieren. Es genügt aber auch eine dem Fahrzeug bei der Montage der Einrichtung zugeordnete Identifikationsnummer, da ja die Fahrzeugdaten amtlich bekannt sind. Während der Betriebsdauer kann der Zähler 27 jeweils nur ausgelesen, nicht aber gelöscht oder verändert werden. Bei jedem Auslesevorgang werden die interessierenden Daten anhand der Differenz zum letzten Auslesevorgang berechnet, wobei jeder Auslesevorgang mit einem Datum versehen wird. Bei der in Fig. 7 dargestellten Variante ist zusätzlich ein sogenannter Stapelspeicher (Stack) 31 vorgesehen, in welchem der ausgelesene Stand des Zählers 27 periodisch, also beispielsweise nach einer gewissen Anzahl von Kilometern mittels einer Stufe 30 oder nach gewissen Zeitabständen mit Hilfe einer internen Uhr 29 zusätzlich gespeichert wird. Dadurch ist eine rückwirkende Kontrolle in Fällen von Störungen möglich. Die effektive Fahrleistung ergibt sich aus der Differenz zum Wert der letzten Auslesung. Bei der amtlichen Registrationsbehörde ist jeweils der Inhalt beider Speicher 27 und 31 vermerkt.

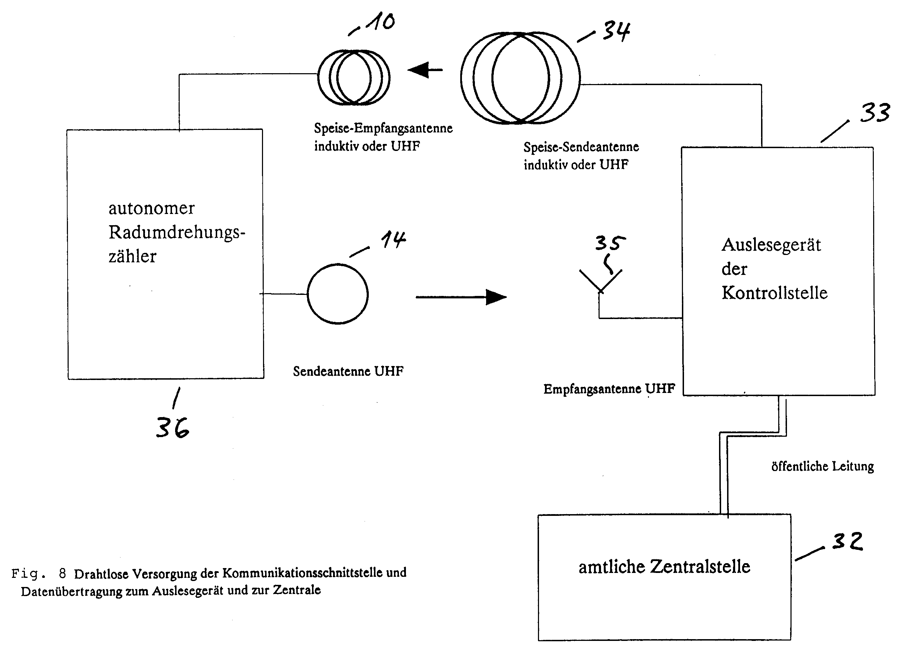

Wenn die erfindungsgemässe Einrichtung dazu verwendet wird, die Höhe einer vom Fahrzeuglenker zu entrichtenden, von der Anzahl der gefahrenen Kilometer abhängige Umweltabgabe festzulegen, dann wird eine derartige Abgabe in der Regel territorial begrenzt und nur im Immatrikulationsland des jeweiligen Fahrzeugs zu entrichten sein. Dann besteht ein Bedürfnis, die Einrichtung an der Landesgrenze aus- und einschalten zu können, wobei diese Manipulationen aber nur durch eine amtlich autorisierte Stelle oder eine amtliche Einrichtung, keinesfalls aber durch den Fahrzeuglenker selbst erfolgen dürfen. Derartige Einrichtungen können auch dazu verwendet werden, bei Polizeikontrollen das Vorhandensein der Einrichtung fernzuüberprüfen. Gemäss Fig. 8 umfassen die genannten Einrichtungen mobile oder in die Fahrbahn eingelassene Abfrageantennen 34, 35, welche den Telemetrieteil der Einrichtung (Radumdrehungszähler 36) mit Energie versorgen und im Fall einer Polizeikontrolle nur die Statuswerte, im Fall des Passierens der Landesgrenze die Statuswerte und die Fahrleistung, auslesen. Dann läuft zwar der Zähler im Ausland weiter, aber es kann bei der Wiedereinreise durch erneutes Auslesen die im Ausland erbrachte Fahrleistung ermittelt werden.

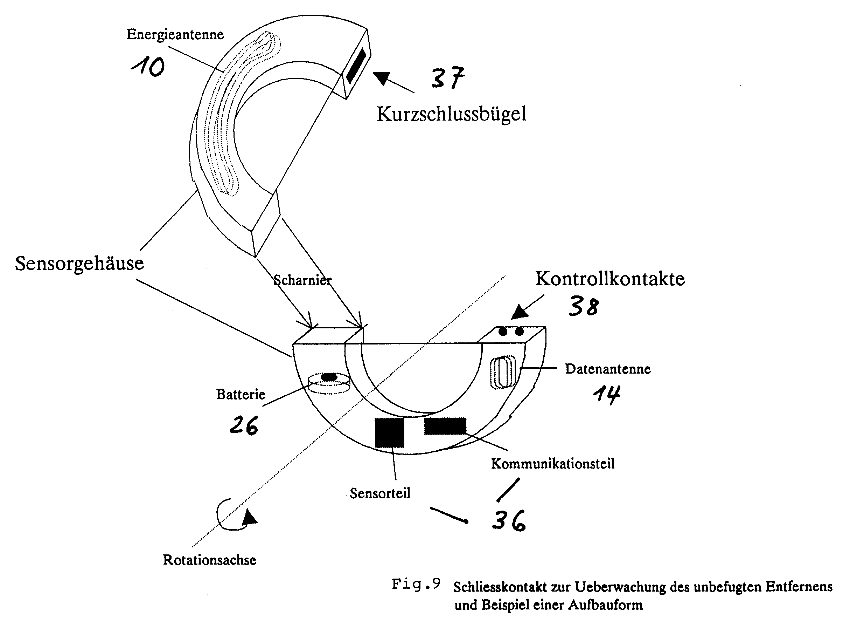

Die Zuordnung der Werte Fahrleistung und Fahrzeugtyp zum Halter und deren Verrechnung erfolgt gemäss Fig. 9 an einer mit dem Bezugszeichen 32 bezeichneten amtlichen Zentralstelle. Alle Auslesestationen 33 ermitteln die Daten der autonomen Radumdrehungszähler 36 über ihre Empfangsantenne 35 während sie über ihre Speise-Sendeantenne 34 Energie abgeben. Die bei Garagen oder an Grenzübergängen stationierten Abfragegeräte 33 liefern die ausgelesenen Werte zusammen mit Ort- und Datumangabe mittels Datenübertrag über ein öffentliches Netz an die Behörde zur Verrechnung der Fahrleistung. Vorzugsweise erfolgt dies gleichzeitig mit dem jährlichen Abgastest, dessen Daten mitübertragen werden und Aufschluss über die Schadstoffbelastung durch das Fahrzeug geben.

Um eine widerrechtliche Demontage der beschriebenen Einrichtung zu verhindern, ist diese gemäss Fig. 9 in ein klammer- oder bügelartiges Gehäuse eingebaut, welches den rotierenden Teil umfasst und zweiteilig aufgebaut ist. Ein geeigneter Detektor überwacht, ob die beiden Gehäuseteile geschlossen oder offen sind. Bei der in Fig. 9 dargestellten möglichen Ausführungsform wird beim Zusammenschliessen der beiden Gehäuseteile ein an dem einen Gehäuseteil angeordneter elektrischer Kurzschlusskontakt 37 mit am anderen Gehäuseteil vorgesehenen Kontrollkontakten 38 geschlossen. Der Kontakt wird vom Radumdrehungszähler überwacht und als Statusinformation in den Speichern 27 und 31 (Fig. 7) festgehalten. Bei einer Demontage wird der Kontakt geöffnet und die entsprechende Unterbrechung wird registriert und gespeichert, so dass der Fahrzeughalter im widerrechtlichen Fall belangt werden kann. Abgesehen davon ist wegen der polizeilichen Kontrollmöglichkeiten auf Vorhandensein des Radumdrehungszählers dessen widerrechtliches Entfernen nicht zu empfehlen.

Die Grösse der Speicher 27, 31 (Fig. 7) und die Kapazität der Batterie 26 (Fig. 6) sind so ausgelegt, dass sie eine Betriebsdauer von mindestens einem Jahr erlauben. Der Batteriewechsel ist entweder nur durch eine autorisierte Reparaturstelle durchzuführen oder durch die Garage bei der jährlichen Abgaswartung, wobei vorzugsweise gemäss nachstehendem Prozedere vorgegangen wird: Zuerst erfolgt ein erster Abfragevorgang zur Ermittlung der Fahrleistung für das vergangene Jahr und deren Uebertragung zusammen mit den Abgaswerten an die amtliche Stelle. Anschliessend wechselt der Garagist die Batterie aus. Dieses Ereignis wird von einem Spannungsdetektor 39 (Fig. 6) des Radumdrehungszählers registriert und ein Batteriezähler 40 wird inkrementiert. Der Batteriezähler 40 ist ebenso wie der Zähler 8 nichtflüchtig ausgerüstet und kann in der bereits beschriebenen Art in den nichtflüchtigen Speicher 27, 31 geschrieben werden. Nach dem Einsetzen der neuen Batterie wird der Radumdrehungszähler erneut abgefragt und das Ergebnis wird an die amtliche Zentrale 32 (Fig. 8) übermittelt. Damit ist der Wechsel amtlich dokumentiert und die Funktionstüchtigkeit ist gewährleistet, wenn die Daten aus dem Speicher bis auf die Anzahl der Batteriewechsel mit der Auslesung vor dem Batteriewechsel übereinstimmen. Jede anderweitige Entfernung der Batterie, welche widerrechtlich und damit nicht zulässig ist, wird registriert und führt zu den entspechenden Konsequenzen.

In einer erweiterten Ausbaustufe des beschriebenen Radumdrehungszählers, können mit den gleichen Bausteinen noch weitere Ereignisse, vorzugsweise das Ueberschreiten der zulässigen Höchstgeschwindigkeit oder eventuell einer Maximaldrehzahl, in einem weiteren nichtflüchtigen Speicher aufsummiert werden. Man benötigt dazu zusätzlich lediglich einen Zeitgeber, einen Zähler und eine Vergleichsschwelle zur Feststellung des Ereignisses. Bei Ueberschreiten der Höchstgeschwindigkeit wird ein nichtflüchtiger Zähler oder Speicher inkrementiert. Desgleichen kann auch die Fahrbeschleunigung (Drehzahländerung) durch Vergleich der Geschwindigkeitsänderung pro Zeit mit einer Schwelle überwacht werden. Wird dieser Schwellwert überschritten, so ist die Fahrweise entsprechend rasant, das heisst, mit umweltschädlichen Schnellstarts verbunden. Diese Ereignisse können ebenfalls gezählt und als Indikator für den Fahrstil verwendet werden.

**Patentansprüche**

1. Verfahren zur fälschungssicheren Erfassung der Radumdrehungszahl von Fahrzeugen durch Ueberwachung der Umdrehungszahl eines mit dem Antrieb gekuppelten, bei Bewegung des Fahrzeugs rotierenden Teils durch einen Sensor, aus dessen Signalen ein Taktsignal gebildet und einem Speicher zugeführt wird, dessen Inhalt an ein Abfragegerät übertragbar ist, dadurch gekennzeichnet, dass die Umdrehungszahl mit Hilfe von von der Rotationslage des drehenden Teils (S) abhängigen, nicht manipulierbaren Beschleunigungsgrössen (g, z) bestimmt wird, und dass die Uebertragung des Inhalts des Speichers (27) an das Abfragegerät (33) durch einen von ausserhalb des Fahrzeugs gespeisten Sender (13, 14) erfolgt.

2. Verfahren nach Anspruch 1, dadurch gekennzeichnet, dass die genannten Beschleunigungsgrössen durch die Erdbeschleunigung (g) und/oder durch die Zentrifugalbeschleunigung (z) gebildet sind.

3. Verfahren nach Anspruch 2, dadurch gekennzeichnet, dass die Energiespeisung des Senders (13, 14) durch das Abfragegerät (33) erzeugt wird.

4. Verfahren nach einem der Ansprüche 1 bis 3, dadurch gekennzeichnet, dass die überwachte Radumdrehungszahl zur Erfassung der Reisedistanz und/oder der Geschwindigkeit des Fahrzeugs verwendet wird.

5. Verfahren nach Anspruch 4, dadurch gekennzeichnet, dass die Abfragegeräte (33) über Datenleitungen mit einer amtlichen Auswertezentrale (32) verbunden sind, in welcher aus der Differenz zweier Speicherauslesungen die Reisedistanz des jeweiligen, durch eine Fahrzeugidentifikation eindeutig definierten, Fahrzeugs ermittelt wird.

6. Verfahren nach Anspruch 5, dadurch gekennzeichnet, dass das Abfragegerät (33) in einem Fahrzeug oder in einem Gebäude stationiert oder in einer Fahrbahn installiert ist.

7. Verfahren nach Anspruch 6, dadurch gekennzeichnet, dass das Auslesen des Speicherinhalts anlässlich einer periodischen Fahrzeugkontrolle oder -wartung und/oder beim Passieren der Landesgrenze erfolgt.

8. Vorrichtung zur Durchführung des Verfahrens nach Anspruch 1, mit einem Sensorteil, einem Zähler, einem Speicher und einem Kommunikationsteil zur Abfrage des Inhalts des Speichers, dadurch gekennzeichnet, dass der Sensorteil (28) mindestens einen Beschleunigungssensor (1, 2) und der Kommunikationsteil einen von ausserhalb des Fahrzeugs speisbaren Sender (13, 14) aufweist.

9. Vorrichtung nach Anspruch 8, dadurch gekennzeichnet, dass der Sensorteil (28) zwei Beschleunigungssensoren, vorzugsweise einen Sensor (1) für die Zentrifugalbeschleunigung (z) und einen Sensor (2) für die Erdbeschleunigung (g) aufweist, aus deren Signalen durch geeignete adaptive Filterung (4) der Messgrösse des Gravitationsfeldes mit Hilfe der Messgrösse der Zentrifugalbeschleunigung das Taktsignal für den Zähler (8) abgeleitet wird.

10. Vorrichtung nach Anspruch 9, dadurch gekennzeichnet, dass der Zähler (8) nichtflüchtig ausgebildet und dem mit unabhängigen Schreib- und Leseeingängen versehenen Speicher (27) vorgeschaltet ist, in welchem der Zählerstand und gegebenenfalls fahrzeugspezifische Daten periodisch abgelegt werden.

11. Vorrichtung nach Anspruch 10, dadurch gekennzeichnet, dass zur Unterdrückung von durch Fahrbahnunebenheiten verursachten Störsignalen zusätzlich zur adaptiven Filterung (4) eine adaptive Sperrung (6) des Eingangs des Zählers (8) nach jedem erfolgten Zähltakt für eine von der Umdrehungszahl abhängige Dauer vorgesehen ist.

12. Vorrichtung nach Anspruch 10, dadurch gekennzeichnet, dass zur Unterdrückung von durch Fahrbahnunebenheiten verursachten Störsignalen zusätzlich zur adaptiven Filterung (4) vor dem Zähler (8) eine Trackingschaltung (15-17) zur Mittelung im Zeitbereich vorgesehen ist.

13. Vorrichtung nach Anspruch 8,
dadurch gekennzeichnet,
dass der Sensorteil (28) einen Beschleunigungssensor (1) und einen konventionellen Umdrehungszähler (18) aufweist, wobei mittels der Signale des Beschleunigungssensors eine Ueberwachung der korrekten Arbeitsweise des Umdrehungszählers erfolgt und bei einem festgestellten Missbrauch an den Zähler (8) ein einer unüblich hohen Umdrehungszahl entsprechendes Ersatzsignal geliefert wird.

14. Vorrichtung nach einem der Ansprüche 10 bis 13,
dadurch gekennzeichnet,
dass die Speisung des Sensorteils (28) des nichtflüchtigen Zählers (8) und des Speichers (27) durch eine interne Batterie (26) erfolgt, und dass der Kommunikationsteil eine Antenne (10) zur Aufnahme der für die Speisung des Senders (13, 14) extern zugeführten Energie aufweist.

15. Vorrichtung nach Anspruch 14,
dadurch gekennzeichnet,
dass der für die Energieaufnahme vorgesehenen Antenne (10) ein Energieumwandler (11) zur Zwischenspeicherung der empfangenen Energie nachgeschaltet ist, welcher einerseits mit dem als Hochfrequenzsender ausgebildeten Sender (13, 14) und andererseits mit einer Steuerstufe (12) verbunden ist.

16. Vorrichtung nach Anspruch 15,
dadurch gekennzeichnet,
dass durch die Steuerstufe (12) eine Ueberprüfung der Versorgungsspannung im Energieumwandler (11) erfolgt und bei ausreichender Versorgungsspannung ein Befehl zum Auslesen des Inhalts des nichtflüchtigen Speichers (27) generiert wird, und dass die Steuerstufe ausserdem zur Ergänzung der vom Speicher ausgelesenen Daten mit Fehlerschutzinformation vorgesehen ist.

17. Vorrichtung nach Anspruch 14, gekennzeichnet durch eine Halterung für den Sensorteil (28) und den Kommunikationsteil, welche einen Verschlusskontakt (37, 38) zur Ueberwachung jeder unbefugten Manipulation aufweist.

18. Vorrichtung nach Anspruch 17,
dadurch gekennzeichnet,

dass der Zustand des Verschlusskontakts (37, 38) als Statusinformation im Speicher (27) gespeichert ist.

19. Vorrichtung nach Anspruch 18,
dadurch gekennzeichnet,
dass jeder Wechsel der internen Batterie (26) mittels eines Spannungsdetektors (39) registriert und in einem nichtflüchtigen Zähler (40) inkrementiert ist.

20. Vorrichtung nach Anspruch 19,
dadurch gekennzeichnet,
dass die Grösse der diversen Speicher (27, 31) und die Kapazität der Batterie (26) so ausgelegt sind, dass eine ungestörte Betriebsdauer von mindestens einem Jahr gewährleistet ist.

Figur 1 : Beschleunigungsaufnehmer an rotierendem Teil mit Orientierungsachsen und einwirkenden Beschleunigungen

$$G + |\vec{v}| + |\vec{z}| + |\vec{f}|$$

Figur 2    Signal an einem Beschleunigungssensor Typ T

EP 0 517 082 A2

g
Typ T  2

g
Typ R  1

DC
|g(0)|  5

TP  3

BP  4

7

NV -
error control  9

voltage controlled MV  6

cl

NV-
Zähler  NV-RAM  8

inh

10

passiv power
converter  11

controller  12

SAW Transmitter
Antenna  13

14

Figur 3:  Erste Ausführung des Radumdrehungssensor mit 2 Beschleunigungssensoren
und Zählersperrschaltung

Figur 4: Erste Ausführung des Radumdrehungssensor mit 2 Beschleunigungssensoren und Tracking Filterung

EP 0 517 082 A2

Figur 5: Zweite Ausführung des Radumdrehungssensors mit einem konventionellen Umdrehungszähler
und einem Beschleunigungssensor gegen Fälschen:

EP 0 517 082 A2

Figur 6: Drahtlose Versorgung der Kommunikationsschnittstelle und
Read-only Dual Port nichtflüchtiger Speicher

**27**

RAM

| Identifikationsdaten |
| Schwellen |
| Zähler |
| Error Status |
| Schliesskontakt/Batterie |

**count**
vom Sensor

**übrige Daten**

**30** Delta KM

**29** Uhr

**update**

Stack **31**

| Zeit / Delta KM |
| Zählerstand |
| Error Status |
| Schliesskontakt/Batterie |

Fig. 7    Nichtflüchtiger Speicher mit periodisch aufdatiertem Stack

EP 0 517 082 A2

**10**

**34**

Speise-Empfangsantenne
induktiv oder UHF

Speise-Sendeantenne
induktiv oder UHF

**33**

autonomer
Radumdrehungszähler

Auslesegerät
der
Kontrollstelle

**14**

**35**

Sendeantenne UHF

Empfangsantenne UHF

**36**

öffentliche Leitung

amtliche Zentralstelle

**32**

Fig. 8 Drahtlose Versorgung der Kommunikationsschnittstelle und
Datenübertragung zum Auslesegerät und zur Zentrale

Energieantenne

10

Kurzschlussbügel

37

Sensorgehäuse

Scharnier

Kontrollkontakte

38

Datenantenne

14

Batterie

26

Kommunikationsteil

Sensorteil

36

Rotationsachse

EP 0 517 082 A2

Fig.9  Schliesskontakt zur Ueberwachung des unbefugten Entfernens
und Beispiel einer Aufbauform